**Europäisches Patentamt**

**European Patent Office**

**Office européen des brevets**

(19)

(11) Publication number:

**0 022 642**
A1

(12) **EUROPEAN PATENT APPLICATION**

(21) Application number: 80302256.5

(51) Int. Cl.³: **H 04 N 5/14**

(22) Date of filing: **03.07.80**

---

(30) Priority: **12.07.79 GB 7924307**

(43) Date of publication of application: **21.01.81**
**Bulletin 81/3**

(84) Designated Contracting States: **DE FR NL SE**

(71) Applicant: **THE RANK ORGANISATION LIMITED, 11 Hill Street, London W1X 8AE (GB)**

(72) Inventor: **Moore, William Thomas, 11 Beaconsfield Road Ealing, London W.5 (GB)**

(74) Representative: **Cullis, Roger et al, c/o H.G. Amann Patents Manager The Rank Organisation Limited 439 Godstone Road, Whyteleafe, Surrey, CR3 OYG (GB)**

---

(54) **Signal processing apparatus for image scanners.**

(57) Signal processing apparatus for an image scanner, wherein a conventional band shaping filter (17) is located in each detector channel between the detector array (10) and the sampling means (12) in the main signal processing equipment (11) in order to provide a selective boost to frequencies within a range of interest having an upper limit adjacent half the sampling frequency (F/2) and to reject higher frequencies above F/2, and a single phase correcting means such as an asymmetric transversal filter (16) is located in the path of the reconstituted signal supplied from the processing equipment (11) to the display device (15) in order to correct phase errors introduced by the band shaping filter (17).

ACTORUM AG

-1-

Signal Processing Apparatus for

Image Scanners

This invention relates to image scanners and, in particular, to signal processing apparatus for use therewith.

In mechanical-optical image scanners, a detector array of one or more detector elements, usually photoconductive detectors, is scanned by an image of a scene to be viewed and produces an electrical signal which is processed and fed to a display device to enable the image to be viewed.

Generally, the signal processing equipment includes sampling means for sampling the signal at a sampling frequency higher than the frequency range of interest, means for amplifying, shaping, storing and otherwise further processing the sampled signal as required, and means for reconstituting the further processed signal ready for supply to the display device.

The characteristics of the detectors, and likewise the signal processing techniques employed, tend to cause roll-off at the higher frequencies. Although noise generated by the detectors and preamplifiers also tends to roll off, this noise roll-off is not as fast as the fall off in signal response. In addition, noise present in the signal being sampled at a frequency above one half the sampling frequency tends to beat down with the sampling frequency to noise of a lower frequency in the range of interest, thereby worsening the signal to noise ratio.

On the other hand, at frequencies below half the sampling frequency, there is a clear benefit to be obtained by boosting higher frequencies within the range of interest, since these frequencies determine the sharpness and detail of the viewed image.

It would therefore be advantageous to provide signal processing equipment which can boost higher frequencies in the range of interest while excluding noise of a frequency above one half the sampling frequency. However, in providing such a boost to higher frequencies in the range of interest, it is necessary to take into account any disturbance of the relative phases of the components of the original signal, since the effect of phase shifts is to increase the noise level at a faster rate than the resolution of the image is improved.

The present invention has for an object to provide a solution to this problem.

Accordingly, the invention provides signal processing apparatus for an image scanner comprising one or more detector elements scanned by an image of a scene to be viewed and producing an electrical signal representative of said image, sampling means operative at a predetermined sampling frequency $F$ for sampling said electrical signal to enable further processing thereof, means for reconstituting the sampled and further processed signal and a display device for receiving the reconstituted signal to enable said image to be viewed, wherein a filter means is located in the or each detector channel ahead of the sampling means in order to shape the band response, and a phase correcting means is located after the signal reconstituting means, said phase correcting means being constructed substantially to correct phase errors introduced prior to sampling by said filter means. The phase correcting means is preferably an asymmetric transversal filter.

Thus, in accordance with the invention, a filter means, which may be a conventional band shaping filter, is located in the or each detector channel ahead of the sampling means, in order to provide a selective boost to frequencies in a range having an upper limit adjacent $F/2$ while rejecting frequencies above $F/2$, and a single phase correcting means such as a transversal filter is located in the path of the reconstituted signal to restore the original phase relationships of the components of the original signal, which have been disturbed by the band shaping action of the filter means. It is to be noted that it is not necessary to provide a phase correcting transversal filter for each detector channel.

A practical arrangement of signal processing apparatus in accordance with the invention will now be described by way of example with reference to the accompanying drawings, in which:-

Figure 1 is a block diagram of a chain of signal processing apparatus; and

Figure 2 is a circuit diagram of an asymmetrical transversal filter.

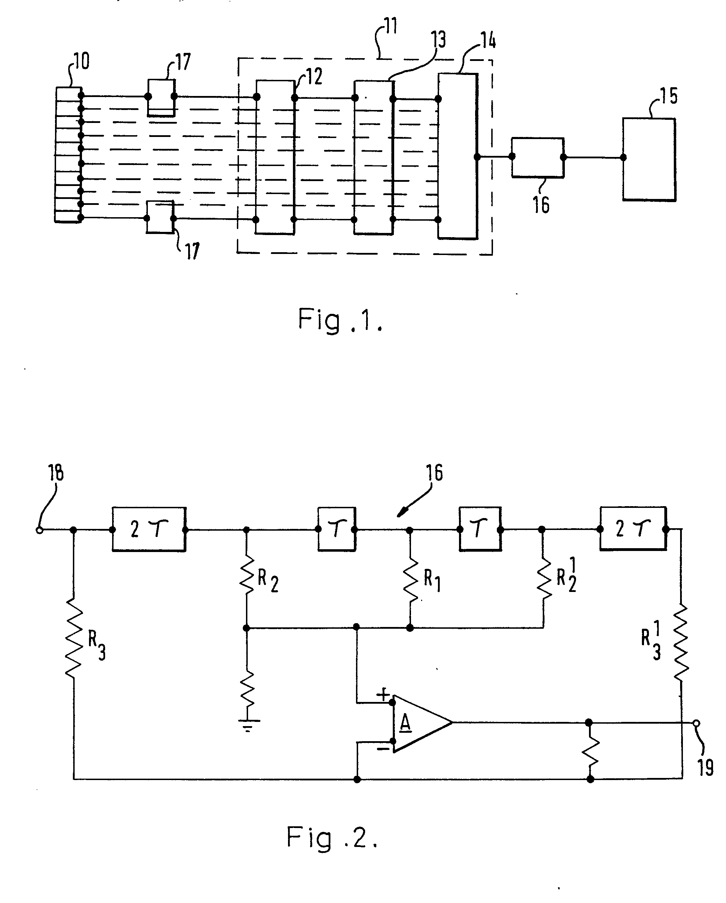

The apparatus shown in Figure 1 comprises an array 10 of detector elements; signal processing equipment 11 constituted by a sampling means 12, further processing means 13 such as amplifying means, shaping means, signal storage means and in general means for effecting any such further process functions on the signal as may be required, and signal reconstituting means 14; and a display device 15. For convenience and clarity the detector array 10 and the display device 15 are considered part of the signal processing chain, although they do not actually perform any signal processing function in themselves.

The sampling means 12, which is of a kind conventional in such processing equipment, operates at a predetermined sampling frequency $F$ above the range of frequencies of interest.

In order to shape the band response for providing a boost to higher frequencies in the range of interest below $F/2$, a conventional band shaping filter 17 is provided in each detector channel between the detector array 10 and the processing equipment 11. In the drawing, filter means 17 for the first and nth detector channels are indicated.

For restoring phase errors in the components of the original signal, due to phase shifts produced by the filter means 17, a transversal filter 16 is located in the path of the reconstituted signal between the signal processing equipment 11 and the display device 15.

The transversal filter 16 is asymmetrically constructed with a frequency response function of the general form:-

$$R(f) = a + b_1 \cos 2\pi f \tau +$$
$$b_2 \sin 2\pi f \tau + c_1 \cos 4\pi f \tau$$
$$+ c_2 \sin 4\pi f \tau \ldots\ldots,$$

where $a$, $b_2$, $b_3$ .... are tapping ratio coefficients of the filter and $\tau$ is the delay parameter of the filter stages.

One simple example of such a filter is shown in Figure 2, which has a response of the form:

$$R(f) = a + b_1 \cos 2\pi f \tau$$
$$+ b_2 \sin 2\pi f \tau - d_1 \cos 6\pi f \tau$$
$$- d_2 \sin 6\pi f \tau .$$

In Figure 2, 18 designates the input and 19 designates the output, A indicates a differential amplifier, delay stages are marked $\tau$ and resistors are designated R.

It is to be noted that $R_2 \neq R_2^{1}$ and $R_3 \neq R_3^{1}$. The differences in the values between these pairs of resistors, which may be referred to as the tapping ratios of the filter, determine the magnitude of the coefficients $b_1$, $b_2$, and $d_1$, $d_2$. In a conventional matched phase symmetric transversal filter, $R_2 = R_2^{1}$ and $R_3 = R_3^{1}$, so that $b_2$ and $d_2$ are equal to zero. However, in the asymmetric filter in accordance with the invention, the tapping ratios of the filter are selected to determine the coefficients in the response function so that the necessary correction of phase errors is achieved.

Thus, referring again to the general case, the modulus of the frequency response of the transversal filter is given by:-

$$| R(f)| = \sqrt{[(a + b_1 \cos 2\pi f \tau + c_1 \cos 4\pi f \tau \ldots)^2 + b_2 \sin 2\pi f \tau + c_2 \sin 4\pi f \tau \ldots)^2]}$$

and the phase $\theta$ is determined by the expression:-

$$\theta = \tan^{-1} \frac{b_2 \sin 2\pi f \tau + c_2 \sin 4\pi f \tau \ldots}{a + b_1 \cos 2\pi f \tau + c_1 \cos 4\pi f \tau \ldots}$$

It is possible to select the coefficients independently in such a manner that a wide range of distinct amplitude and phase characteristics are obtained. Usually, however, such a complex determination will not be necessary. If, for example, it is only phase correction that is required $|R(\underline{f})|$ is made equal to unity at the frequencies of interest. More generally, however, some trimming of the amplitude response is desirable. In this case, to give one example, if the amplitude is made unity at $\underline{f} = \underline{f}_1$ and at $\underline{f} = \underline{f}_2$, the corresponding phases being $\Theta_1$ and $\Theta_2$, then if an asymmetric transversal filter is constructed based on four delay stages each with a delay parameter $\gamma$, four independent tapping ratios are available corresponding to specific values for $\underline{b}_1$, $\underline{b}_2$, $\underline{c}_1$ and $\underline{c}_2$, with $\underline{a} = 1$.

Then:-

$$(1 + \underline{b}_1 \cos 2\pi \underline{f}_1 \gamma + \underline{c}_1 \cos 4\pi \underline{f}_1 \gamma) \tan \Theta_1$$
$$= \underline{b}_2 \sin 2\pi \underline{f}_1 \gamma + \underline{c}_2 \sin 4\pi \underline{f}_1 \gamma$$

and

$$(1 + \underline{b}_1 \cos 2\pi \underline{f}_2 \gamma + \underline{c}_1 \cos 4\pi \underline{f}_2 \gamma) \tan \Theta_2$$
$$= \underline{b}_2 \sin 2\pi \underline{f}_2 \gamma + \underline{c}_2 \sin 4\pi \underline{f}_2 \gamma.$$

These two equations can be solved for, say, $\underline{b}_1$ and $\underline{c}_1$, in terms of $\underline{b}_2$ and $\underline{c}_2$, and then

substituted in the equations:

$$(1 + \underline{b}_1 \cos 2\pi \underline{f}_1 \tau + \underline{c}_1 \cos 4\pi \underline{f}_1 \tau)^2$$
$$+ (\underline{b}_2 \sin 2\pi \underline{f}_1 \tau + \underline{c}_2 \sin 4\pi \underline{f}_1 \tau)^2 = 1$$

and

$$(1 + \underline{b}_1 \cos 2\pi \underline{f}_2 \tau + \underline{c}_1 \cos 4\pi \underline{f}_2 \tau)^2$$
$$+ (\underline{b}_2 \sin 2\pi \underline{f}_2 \tau + \underline{c}_2 \sin 4\pi \underline{f}_2 \tau)^2 = 1,$$

thereby to give a pair of quadratic equations in $\underline{b}_2$ and $\underline{c}_2$, which may be solved for $\underline{b}_2$ and $\underline{c}_2$ and thence also determine $\underline{b}_1$ and $\underline{c}_1$.

Finally, it should be mentioned that the invention is applicable to the case of an image scanner wherein a single detector element is employed.

## Claims

1.    Signal processing apparatus for an image scanner
comprising one or more detector elements scanned by an
image of a scene to be viewed and producing an
electrical signal representative of said image,
sampling means operative at a predetermined sampling
frequency $\underline{F}$ for sampling said electrical signal to
enable further processing thereof, means for reconstituting the sampled and further processed signal
and a display device for receiving the reconstituted
signal to enable said image to be viewed, wherein a
filter means is located in the or each detector
channel ahead of the sampling means in order to shape
the band response, and a phase correcting means is
located after the signal reconstituting means, said
phase correcting means being constructed substantially
to correct phase errors introduced prior to sampling
by said filter means.

2.    Apparatus according to claim 1, wherein said
phase correcting means is an asymmetric transversal
filter.

3.    Apparatus according to claim 2, wherein the
transversal filter has a frequency response $R(\underline{f})$ of

the general form:-

$$R(\underline{f}) = \underline{a} + \underline{b}_1 \cos 2\pi \underline{f} \Upsilon + \underline{b}_2 \sin 2\pi \underline{f} \Upsilon$$
$$+ \underline{c}_1 \cos 4\pi \underline{f} \Upsilon + \underline{c}_2 \sin 4\pi \underline{f} \Upsilon$$
$$\ldots\ldots ,$$

where $\underline{a}$, $\underline{b}_1$, $\underline{b}_2$, $\underline{c}_1$, $\underline{c}_2$ .... are tapping ratio coefficients of the filter and $\Upsilon$ is the time delay parameter of the filter stages, said coefficients $\underline{a}$, $\underline{b}_1$, $\underline{b}_2$, $\underline{c}_1$, $\underline{c}_2$ .... being selected to correct said phase errors.

4.　Apparatus according to claim 3, wherein, for phase correction at given frequencies, said coefficients are selected such that the modulus of the frequency response $|R(\underline{f})|$ has the same value at said given frequencies.

5.　Apparatus according to claim 4, wherein, for control of amplitude response at said given frequencies, said coefficients are also selected such that the amplitude response of the transversal filter has the same value at said given frequencies.

Fig.1.

Fig.2.

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | I.E.E.E. TRANSACTIONS ON COMMUNI-CATIONS TECHNOLOGY, vol. COM-12 no. 3, September 1964 NEW YORK (US) BRUCE: "Optimum pre-emphasis and De-emphasis networks for transmission of television by PCM" pages 91-96 <br> * Page 91, right-hand column, line 33 to page 95, left-hand column, line 23 * <br> --- | 1 | H 04 N 5/14 |
| A | JOURNAL OF THE SMPTE, vol. 82, no. 8, August 1973 NEW YORK (US) GOLDBERG: "PCM encoded NTSC color television subjective tests" pages 649-654 <br> * Page 650, left-hand column, line 12 to center column, line 12; page 652, center column line 11 * <br> --- | 1 | TECHNICAL FIELDS SEARCHED (Int.Cl. 3) <br><br> H 04 N 5/14 <br> 7/13 <br> 9/02 <br> 9/535 |
| A | THE BELL SYSTEM TECHNICAL JOURNAL vol. 46, no. 1, January 1967 NEW YORK (US) MOUNTS: "Low-resolution TV: An experimental digital system for evaluating bandwidth-reduction techniques" pages 167-198 <br> * Page 180, line 19 to page 181, line 37 * <br> --- | 1 | CATEGORY OF CITED DOCUMENTS <br><br> X: particularly relevant <br> A: technological background <br> O: non-written disclosure <br> P: intermediate document <br> T: theory or principle underlying the invention |
| | COMMUNICATIONS PRESENTEES AU COLLOQUE INTERNATIONAL SUR LES TELECOMMUNICATIONS PAR SATELLITE. PARIS (FR) November 28-30, 1972 HARVEY: "F4-An experimental eight-phase system for television" ./. | 1,2 | E: conflicting application <br> D: document cited in the application <br> L: citation for other reasons <br><br> &: member of the same patent family, corresponding document |

The present search report has been drawn up for all claims

| Place of search | Date of completion of the search | Examiner |
|---|---|---|
| The Hague | 21-10-1980 | CRISTOL |

EPO Form 1503.1 06.78

European Patent
Office

**EUROPEAN SEARCH REPORT**

0022642

Application Number

EP 80 30 2256

-2-

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | pages 417-424<br><br>* Page 421, lines 4-9 *<br><br>---<br><br>JOURNAL OF THE AUDIO ENGINEERING SOCIETY, vol. 26, no. 10, October 1978<br>NEW YORK (US)<br>BLESSER: "Digitization of Audio A comprehensive examination of theory, implementation and current practice"<br>pages 739-772<br><br>* Page 758, right-hand column, line 52 to page 759, left-hand column, line 3 *<br><br>--- | 1 | |
| | | | TECHNICAL FIELDS SEARCHED (Int. Cl. 3) |